# EUROPÄISCHE PATENTSCHRIFT

(11) **EP 1 600 553 B1**
(45) Veröffentlichungstag und Bekanntmachung des Hinweises auf die Patenterteilung: **16.07.2008**
(21) Anmeldenummer: 05405219.6
(22) Anmeldetag: 03.03.2005
(51) Int. Cl.: D07B 1/18, D07B 1/06

(54) **Sicherheitsfangseil**
Safety arrester cable
Cable d'arrêt de sécurité

(30) Priorität: 10.05.2004 CH 8172004
(43) Veröffentlichungstag der Anmeldung: 30.11.2005
(73) Patentinhaber: Cortex Hümbelin AG, 5102 Rupperswil (CH)
(72) Erfinder: Nüesch, Walter, 9212 Arnegg (CH)
(74) Vertreter: Schneider Feldmann AG Patent- und Markenanwälte

(56) Entgegenhaltungen:
- WO-A-02/40298
- DE-C- 376 774
- DE-U1- 9 005 711
- FR-A- 1 228 562
- GB-A- 2 354 264
- US-A- 3 222 858

## Beschreibung

Die vorliegende Erfindung betrifft ein Sicherheitsfangseil insbesondere zur Verbindung eines Rades eines Rennwagens mit dessen Chassis, wobei das Seil aus einer Vielzahl unverzwirnter Windungen, die Schlaufen bilden, geformt ist und wobei an beiden Enden mindestens je eine offene Lasche gebildet ist.

Sicherheitsfangseile werden in der Technik dort eingesetzt, wo an sich starre Verbindungen unter gewissen Bedingungen zerstört werden können, und wo sichergestellt werden soll, dass der abgebrochene Teil nicht unkontrolliert wegfliegen kann und dadurch zu grösseren Schäden beziehungsweise zu Gefährdung von Personen führt.

Aus der US-3.222.858 ist ein Sicherheitsseil für die Anbindung eines Sicherheitsgurtes bekannt, welches aus einer Vielzahl unverzwirnter Windungen die Schlaufen bildet, geformt, wobei Laschen an den Enden eine Verbindung mit dem Chassis und mit dem Sicherheitsgurt ermöglichen.

Im Automobilrennsport kommt es bekanntlich immer wieder vor, dass bei Kollisionen zweier Fahrzeuge oder eines Fahrzeuges mit der Pistenberandung die Radachsen und deren Aufhängung brechen und das Rad unkontrolliert wegfliegt oder wegkatapultiert wird. Hierdurch sind schon öfters Personen am Pistenrand verletzt oder gar getötet worden. Dieses Problem ist bekannt, und man hat entsprechend Vorschriften erlassen, dass Räder mit dem Fahrzeugkörper über ein Sicherheitsfangseil verbunden sein müssen. Durch diese Sicherheitsmassnahme sind auch bisher bereits vielfach schwerere Unfälle vermieden worden, doch die bisher eingesetzten Sicherheitsfangseile haben trotz allem noch immer eine ungenügende Wirkung.

Heute sind Fasern beziehungsweise daraus gefertigte Garne auf dem Markt, die eine mehrfach höhere Reissfestigkeit aufweisen als Stahlfasern. Während beispielsweise Stahlfasern eine Reissfestigkeit von 3.0 cN/dtex aufweisen, haben Karbonfasern eine Reissfestigkeit von 20 cN/dtex. Auch die relativ elastischen m-Aramid-Fasern haben eine Reissfestigkeit von 4.7 cN/dtex, während die starren p-Aramid-Fasern eine Reissfestigkeit von 19 cN/dtex und die modernen PBO-Fasern gar eine Reissfestigkeit von rund 37 cN/dtex aufweisen. Sicherheitsfangseile, die aus diesen modernen hochreissfesten Fasern, wie Karbonfasern, p-Aramid-Fasern und PBO-Fasern, hergestellt sind, vermögen Zugkräfte aufzunehmen, die die tatsächlich auftretenden Kräfte bei weitem übertreffen.

Entsprechend sind solche Sicherheitsfangseile aus entsprechenden hochreissfesten Kunststofffasern hergestellt worden, wobei man entsprechende Garne aus solchen hochreissfesten Fasern endlos zwischen den beiden endseitigen Einhängeösen gewickelt hat. Die entsprechenden Fasern verlaufen folglich allesamt parallel zueinander. Bei den bisher untersuchten Unfällen konnte festgestellt werden, dass das Seil zwischen den beiden Einhängeösen den aufgetretenen Kräften standgehalten hat, während die Einhängeösen gebrochen sind. Dies ist auch nicht verwunderlich, da die hochreissfesten Materialien üblicherweise eine Dehnung bis zur Bruchverlängerung von 1.5 bis maximal 3.5 Prozent aufweisen. Im Prinzip könnte dies kompensiert werden, indem man entsprechend lange Sicherheitsfangseile herstellen würde. Dies ist jedoch nicht gangbar, da hierdurch die Gefahr gegeben wäre, dass das am Fangseil hängende Rad den Piloten erschlagen könnte. Hinzu kommt, dass gerade im Automobilrennsport ein möglichst leichtes Sicherheitsfangseil mit geringst möglichem Luftwiderstand erwünscht ist. Es ist somit auch keine Lösung, Sicherheitsfangseile aus weniger hochfestem dafür elastischerem Material zu fertigen und das Seil entsprechend dicker zu gestalten.

Das Problem lässt sich nur lösen, wenn das Seil die bestmögliche Energieaufnahme (Work-to-break-Energy) aufweist. Dies wurde gemäss der GB-A-2'373'561 dadurch versucht zu erreichen, dass man das Sicherheitsfangseil mit einem impulsabsorbierenden Mittel versieht. Hierbei wird in einen äusseren Zylinder ein innerer, zu deformierender Zylinder angeordnet, an den das Sicherheitsfangseil direkt angelascht ist. Eine solche Lösung führt aber sowohl zu Gewichtsproblemen als auch zu Materialproblemen und verlagert diese praktisch nur vom Seil zum schockabsorbierenden Element.

Momentan werden im Formel 1-Rennsport im wesentlichen Sicherheitsfangseile gemäss der WO 03/048602 der Anmelderin eingesetzt. Diese haben sich auch bewährt und erfüllen alle Vorschriften der FIA.

Neu soll diese Vorschrift jedoch geändert werden, da man bezüglich dem Kunststoff Bedenken geltend macht, dass dessen Alterung und UV-Belastung zu unkontrollierten Qualitätsmängeln führen könnte. Aus diesem Grund werden reine Kunststoffseile nicht mehr zugelassen werden.

Es ist daher die Aufgabe der vorliegenden Erfindung, ein Sicherheitsfangseil zu schaffen, welches einen hohen metallischen Anteil aufweist und dabei die Festigkeitswerte bei möglichst geringem Seilquerschnitt erreicht.

Diese Aufgabe löst ein Sicherheitsfangseil der eingangs genannten Art mit den Merkmalen des Patentanspruches 1.

In der einfachsten Ausführung ist das erfindungsgemässe Sicherheitsfangseil so gefertigt, dass ein einziger Metalldraht aus Ni oder einer austenitischen Ni-Cr-Legierung gefertigt ist. Hierbei wird dieser Draht endlos durch eine Vielzahl parallel verlaufender Schlaufen geformt. Dabei entsteht praktisch ein langgestreckter Wickel aus einer Vielzahl von Schlaufen, wobei diese entsprechend der Herstellungsmethode als Wickel oder Windungen bezeichnet werden können. Die Anzahl der Windungen bemisst sich selbstverständlich nach der zu erzielenden Stärke des Sicherheitsfangseiles. Hierbei interessiert allerdings weniger die maximale Reisskraft des Seiles, als vielmehr die aufnehmbare Arbeit bis zum Erreichen der maximal aufnehmbaren Kraft, beziehungsweise die Gesamtarbeit bis zum Reissen des Seiles. Hierauf wird später nochmals eingegangen. Über die parallelen Windungen wird ein Schutzschlauch im Bereich der gestreckt verlaufenden parallelen Bereiche angebracht, wobei dieser Überzug nicht dem Schutz des Drahtes gegen Umwelteinflüsse dient, sondern vielmehr die Relativlage zueinander der einzelnen Windungen sicherstellen soll. An den frei liegenden Umlenkstellen verbleibt je eine offene Lasche. Diese offenen Laschen dienen der Anhängung einerseits am Rad und andererseits am Chassis. Entsprechend sind an diesen beiden Teilen Bolzen vorgesehen, an denen das Seil einhängbar gesichert ist.

Bei den durchgeführten Versuchen hat sich gezeigt, dass die maximal aufnehmende Arbeit bis zur Erreichung der Maximalreisskraft bei grösseren Seildurchmessern kaum noch zunimmt, was im ersten Moment unverständlich scheint. Dies hängt offensichtlich damit zusammen, dass bei dickeren Seilen die Belastung des Drahtes an den Umlenkstellen, wo die Laschen gebildet werden, unterschiedlich ist. Es hat sich dabei erwiesen, dass man dieses Problem reduzieren kann, indem man die Laschen in zwei Teillaschen unterteilt.

Es zeigt:

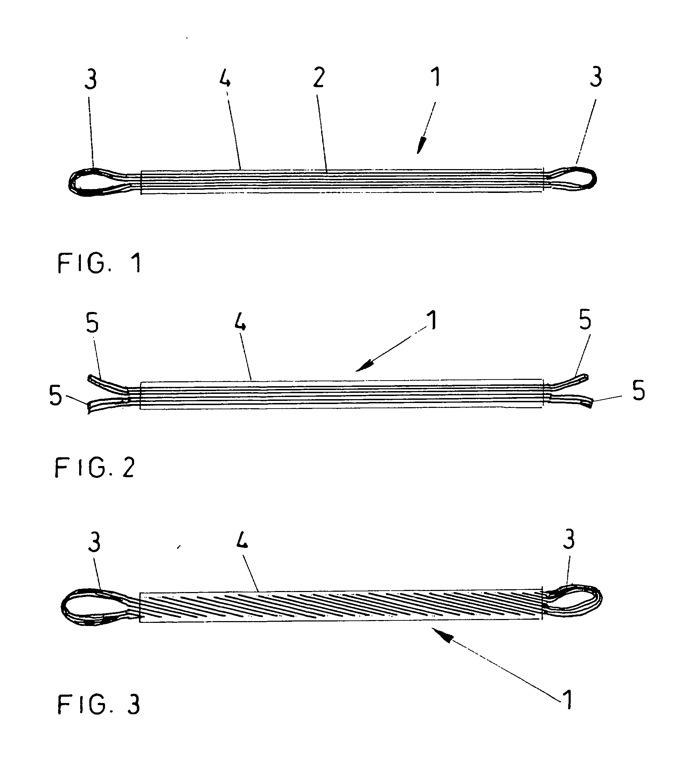

- Figur 1: ein Sicherheitsfangseil mit einfachen Endlaschen;
- Figur 2: eine Ausführung des Sicherheitsfangseils mit zwei Teilendlaschen und
- Figur 3: ein Sicherheitsfangseil, bei dem das gestreckt gewickelte Seil verdreht ist.
- Fig. 4 - 6: zeigen drei Dehnungslast-Diagramme.

Zum besseren Verständnis sind rein schematisch drei verschiedene Ausführungsformen des erfindungsgemässen Fangseiles dargestellt. Das Seil gesamthaft ist immer mit 1 bezeichnet. Es besteht aus einer Vielzahl von Windungen 2. Diese Windungen 2 bilden an den Enden die erwähnten offenen Laschen 3. Über die Windungen 2, die untereinander parallel verlaufen, ist im Bereich zwischen den beiden Laschen 3 eine stützende Hülle 4 gestülpt. Diese stützende Hülle 4 kann beispielsweise als Schrumpfschlauch ausgestaltet sein. Da wie bereits erwähnt, die maximal aufnehmende Arbeit bis zur Erreichung der Maximalreisskraft von einer möglichst gleichmässig auf den Draht an den Umlenkstellen eingeleiteten Kraft abhängig ist, hat es sich als vorteilhaft erwiesen, die Laschen 3 in je zwei Teillaschen 5 zu unterteilen. Hierdurch ist das Seil insgesamt an den Umkehrstellen bei den Laschen weniger dick, so dass die Differenz zwischen den zuäusserst liegenden Windungen 2 und den zuinnerst liegenden Windungen weniger gross ist. Somit tritt über den gesamten Draht eine eher gleichbleibende Kraft auf.

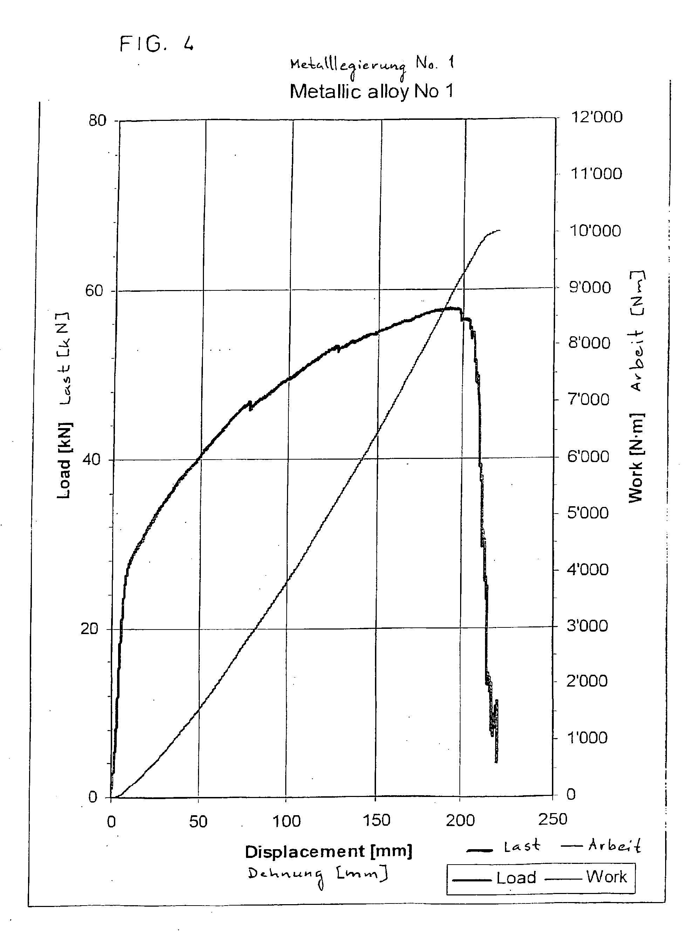

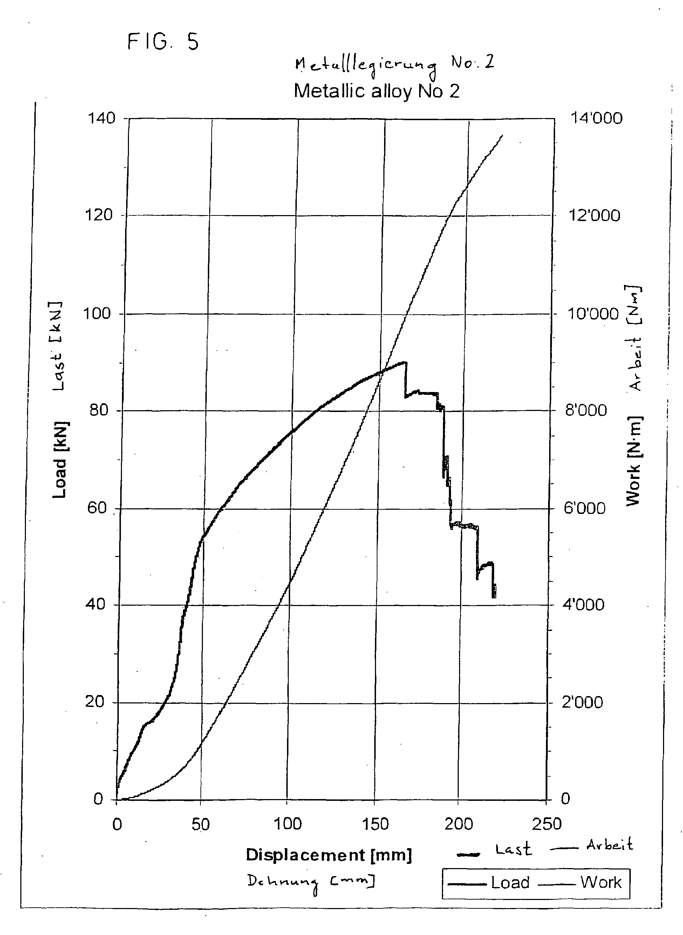

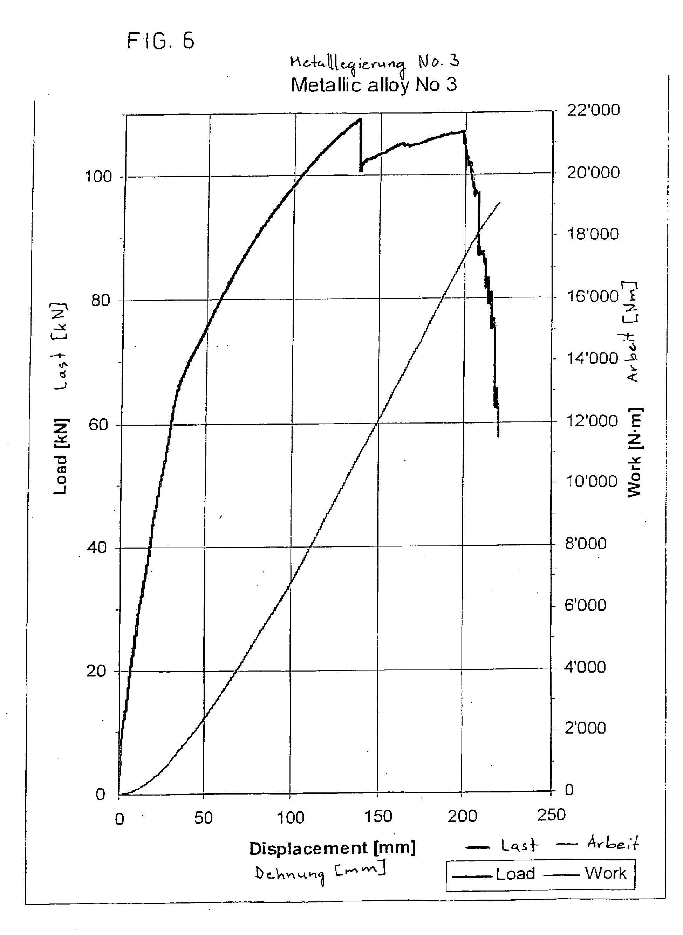

In den Figuren 4-6 sind rein beispielsweise die Kraftdehnungsdiagramme von drei Seilen mit unterschiedlichen Durchmessern und aus Draht unterschiedlicher Legierungen dargestellt. Die Versuche wurden mit Seilen mit den folgenden Charakteristiken durchgeführt:

| Item | Mass [kg] | Diameter [mm] | Length [mm] | Fmax [kN] | Work to Fmax [N·m] | Work to end of test [N·m] |
|---|---|---|---|---|---|---|
| No 1 | 0.5 | 12-13 | 660 | 57.8 | 8'900 | 10'000 |
| No 2 | 0.8 | 14 - 15 | 575 | 90.3 | 10'000 | 13'700 |
| No 3 | 1.0 | 16 - 17 | 595 | 109.2 | 10'900 | 19'100 |

Aus den Diagrammen ist ersichtlich, dass bei einer Seillänge von rund 600 mm die maximale Dehnung bis zum Erreichen der maximalen Zugkraft rund 200 mm beträgt. Hieraus ergibt sich, wie aus der nachfolgenden Tabelle ersichtlich ist, eine extrem hohe Arbeitsleistung bis zur Erreichung der maximalen Reisskraft (work to Fmax), nämlich je nach Ausführungsbeispiel 8'900 N·m oder 10'000 N·m beziehungsweise im dritten Beispiel 10'900 N·m). Ein vergleichbarer Test mit einem Stahlseil aus hochelastischem Stahl hat bei einem Seildurchmesser von 15 mm, was folglich dem Ausführungsbeispiel nach Nr. 2 entspricht, lediglich eine Arbeit von 2'750 N·m bis zum Erreichen der maximalen Reisskraft ergeben. Die heute vorgeschriebene Arbeitsaufnahme von 5'000 N·m für ein zugelassenes Fangseil kann mit der erfindungsgemässen Lösung daher problemlos erzielt werden. Versuche wurden mit Drähten gemacht, die im Handel unter den folgenden Bezeichnungen bekannt sind, nämlich Inconel® 600, Inconel® 601, Inconel® 617, Inconel® 625 und Inconel® 686. Bei der Bezeichnung Inconel® handelt es sich um eine eingetragene Marke der Firma Huntington Alloys Canada Ltd.

Für den hier interessierenden Zweck erweisen sich praktisch alle Ni-Cr-Legierungen mit einem Ni-Anteil von 50 - 80 Gew.-% als brauchbar, wobei vorzugsweise jedoch der Ni-Anteil zwischen 60 und 75 Gewichtsanteilen liegt. Das bekannte Inconel® 600 enthält beispielsweise 60% Ni 22 % Cr und 18% Fe. Bei den bekannten Legierungen liegen allgemein die Gewichtsanteile der einzelnen Komponenten in den folgenden Bereichen:

| | |
|---|---|
| Ni | 50-80 % |
| Cr | 15-25 % |
| Fe | 5-25 % |
| Mo | 0-10 %. |

Es sind insbesondere auch Inconel® Legierungen bekannt, die zur Erzielung der Schweissfähigkeit oder zur Reduktion der Korrosion beziehungsweise des Lochfrasses mit geringen Anteilen weiterer Metalle versehen sind, wie beispielsweise Wolfram, Niob, Tungsten oder Kobalt. Diese Zusätze sind für den hier interessierenden Zweck jedoch nicht relevant. Die für diese Anwendungen benötigten Mengen sind derart klein, dass eine spezifisch hierfür gefertigte Legierung oder eine exakt ausgewählte Legierung nicht erforderlich ist. Praktisch alle Ni-Cr Legierungen, die erprobt worden sind, haben die erforderlichen Eigenschaften gezeigt. Lediglich Legierungen mit einem gewissen Molybdän und Niob Anteil haben eine grössere Dehnung gezeigt. Insofern sind solche Legierungen leicht zu bevorzugen. Trotzdem ist dies nicht zwingend erforderlich, da ohnehin trotz der extremen Anforderungen mit dem erfindungsgemässen Sicherheitsfangseil eine rund doppelte Sicherheit gegenüber den maximal geforderten Eigenschaften erzielt wird.

Wie aus den Diagrammen erkennbar, bildet die Arbeit die unter der Kraftdehnungsdiagrammkurve gebildete Fläche. Soll diese Arbeit zusätzlich erhöht werden, so kann dies erzielt werden durch die Beigabe einer Anzahl von Schlaufen aus Garn aus relativ starren Kunststofffilamenten. Hierbei kommen insbesondere Kunststofffilamente aus der Auswahl von PBO (Poly-p-phenylene-2,6-benzo-bisoxazole) oder Karbonfasern oder auch P-Arimide.

Bei der Fertigung von Seilen aus Metall oder Kunststoff ist bis heute bekannt, dass durch die Verzwirnung und Verdrehung der einzelnen Litzen die Gesamtstärke eines Seiles insbesondere eines Textil- oder Stahlseiles erhöht werden kann. Entsprechende Versuche wurden auch hier durchgeführt.

Es wird darauf hingewiesen, dass diese Vergleichsversuche vom beanspruchten Schutzbereich der vorliegenden Erfindung ausgeschlossen sind.

Das erstaunliche Resultat ist, dass eine Verzwirnung beziehungsweise ein Verdrehen des Seiles die aufzunehmende Arbeit bis zur Erreichung der maximalen Reisskraft reduziert. Auch die maximale Reisskraft wird hierdurch reduziert. Während die maximale Reisskraft jedoch nur gering reduziert wird, verringert sich die aufzunehmende Arbeit bis zum Erzielen der maximalen Reisskraft jedoch erheblich. So wurde beispielsweise ein Seil mit 117 Windungen eines Drahtes mit 0,5 mm Durchmesser getestet. Das Seil besass eine Länge von 610 mm. Die maximale Reisskraft Fmax wurde bei 33 kN erreicht. Die maximale Dehnung betrug 160 mm.

Ein identisch gefertigtes Seil wurde anschliessend um drei Umdrehungen verdreht. Das so verdrehte Seil besass noch eine Länge von 605 mm. Die maximale Reisskraft betrug in diesem Fall nur noch 30 kN, d.h. die maximale Reisskraft lag fast 10 % tiefer. Während beim ungedrehten Seil die Arbeit bis zur Erreichung der Maximalreisskraft 4'300 N·m betrug, betrug diese Arbeit beim gedrehten Seil nur noch 3'435 N·m, während der maximale Dehnwert sich auf 146 mm verringerte. All dese Angaben sind völlig konträr zu den Werten die bei Kunststoffseilen festgestellt werden. Das erfindungsgemässe Resultat ist daher für den Fachmann völlig überraschend. Es führt aber zu einer sehr interessanten Möglichkeit, indem ein an sich zu stark gestaltetes Seil auf sehr einfache Weise bezüglich seiner physikalischen Eigenschaften verändert werden kann. Bekanntlich sind die Formel-1-Rennwagen so gestaltet, dass das eigentliche Cockpit eine Hochsicherheitszelle bildet. An diese greift das Chassis an. Lassen sich über das Sicherheitsfangseil zu hohe Energien übertragen, so kann dies dazu führen, dass das Sicherheitsfangseil praktisch nie reisst, und folglich unter Umständen derart grosse Energien auf die Sicherheitszelle übertragen werden, dass diese Schaden nehmen kann. Dies lässt sich im Prinzip korrigieren, indem man das erfindungsgemässe Sicherheitsfangseil somit entsprechend verdreht.

Die Anwendung von Ni-Cr-Legierungen zur Fertigung von Seilen ist diesseits nicht bekannt. Bei der Verwendung von Seilen mit hoher Tragkraft ist die hier auftretende Dehnung eher unerwünscht. Die Verwendung der Ni-Cr-Legierungen hat sich bisher auf Anwendungen beschränkt, bei denen das Material hohen chemischen Belastungen ausgesetzt ist. Ni-Cr-Legierungen sind bekannt für ihre hervorragende Beständigkeit gegen Oxidation und Hochtemperaturkorrosion. Entsprechend sind diese Legierungen vor allem eingesetzt worden in der Petrochemie, im Bereich des Gasturbinenbaus, in der chemischen Verfahrenstechnik, in der Raumfahrt, in Umweltschutzanlagen und in Atomreaktoren.

### Bezugszeichenliste:

- 1: Sicherheitsfangseil
- 2: Windungen
- 3: Laschen
- 4: Hülle
- 5: Teillaschen

## Patentansprüche

1. Sicherheitsfangseil (1) insbesondere zur Verbindung eines Rades eines Rennwagens mit dessen Chassis, wobei das Seil aus einem endlosen Metalldraht zu einer Vielzahl parallel verlaufender unverzwirnter Windungen (2) geformt ist, und worüber ein Schutzschlauch als Hülle (4), der die Relativlage der Windungen (2) sichert gezogen ist, wobei an den beiden Enden je mindestens eine offene Lasche (3) gebildet ist, **dadurch gekennzeichnet, dass** das Sicherheitsfangseil (1) zu mehr als 70 % aus einem Draht aus einer austenitischen Ni-Cr-Legierung gefertigt ist, wobei die Ni-Cr-Legierung einen Nickelanteil von 50 - 80 Gew. %, vorzugsweise zwischen 60 und 75 Gew. %, enthält.

2. Sicherheitsfangseil nach Anspruch 1, **dadurch gekennzeichnet, dass** dieses aus Draht aus einer Ni-Cr-Legierung mit Molybdän und Niob besteht.

3. Sicherheitsfangseil nach Anspruch 1, **dadurch gekennzeichnet, dass** der verwendete Draht eine Dicke zwischen 0,3 und 1,4 mm, vorzugsweise jedoch zwischen 0,5 und 0,8 mm hat.

4. Sicherheitsfangseil nach Anspruch 1, **dadurch gekennzeichnet, dass** dieses zusätzlich eine Anzahl an Schlaufen aus Garn aus relativ starren Kunststofffilamenten aus der Auswahl von PBO (Poly-p-phenylene-2,6-benzo-bisoxazole), Karbonfasern und P-Aramiden enthält.

5. Sicherheitsfangseil nach Anspruch 4, **dadurch gekennzeichnet, dass** die Anzahl der Schlaufen aus Garn weniger als 50 % der Anzahl der Schlaufen aus Metall beträgt.

6. Sicherheitsfangseil nach Anspruch 1, **dadurch gekennzeichnet, dass** an den beiden Seilenden die offenen Laschen zu zwei Teillaschen geteilt sind.

7. Sicherheitsfangseil nach Anspruch 1, **dadurch gekennzeichnet, dass** der Schutzschlauch ein Schrumpfschlauch ist, der die Relativlage der Windungen des Drahtes sichert und die Laschen an den Seilenden frei lässt.

## Claims

1. A safety arrestor cable (1) in particular for connecting a wheel of a racing car to the chassis thereof, wherein the cable is formed from a continuous metal wire into a plurality of parallel untwisted turns (2) and whereover a protective hose is pulled as a sleeve (4) which secures the relative position of the turns (2), wherein at least one open tab (3) is formed at both ends, **characterised in that** more than 70% of the safety arrestor cable (1) is manufactured from a wire made of an austenitic Ni-Cr alloy, wherein the Ni-Cr alloy contains a nickel fraction of 50-80 wt.%, preferably between 60 and 75 wt.%.

2. The safety arrestor cable according to claim 1, **characterised in that** this consists of a Ni-Cr alloy with molybdenum and niobium.

3. The safety arrestor cable according to claim 1, **characterised in that** the wire used has a thickness between 0.3 and 1.4 mm, but preferably between 0.5 and 0.8 mm.

4. The safety arrestor cable according to claim 1, **characterised in that** this additionally contains a number of loops of yarn made of relatively rigid plastic filaments selected from PBO (poly-p-phenylene-2, 6-benzo-bisoxazole), carbon fibres and P-aramides.

5. The safety arrestor cable according to claim 4, **characterised in that** the number of loops of yarn is less than 50% of the number of loops of metal.

6. The safety arrestor cable according to claim 1, **characterised in that** the open tabs at both ends of the cable are divided to give two partial tabs.

7. The safety arrestor cable according to claim 1, **characterised in that** the protective hose is a shrink-on hose which secures the relative position of the turns of the wire and leaves the tabs at the cable ends free.

## Revendications

1. Elingue de sécurité (1), notamment pour relier une roue d'une voiture de course au châssis de celle-ci, moyennant quoi l'élingue est formée d'un fil métallique infini agencé en une pluralité d'enroulements (2) parallèles pelucheux, et sur laquelle une gaine de protection faisant office d'enveloppe (4), qui assure la position relative des enroulements (2), est étirée, moyennant quoi aux deux extrémités, au moins une éclisse ouverte (3) est respectivement formée, **caractérisée en ce que** l'élingue de sécurité (1) est fabriquée à plus de 70% dans un fil d'un alliage Ni-Cr austénitique, moyennant quoi l'alliage Ni-Cr contient une fraction de nickel dans un pourcentage en poids de 50 à 80%, de préférence un pourcentage en poids compris entre 60 et 75%.

2. Elingue de sécurité selon la revendication 1, **caractérisée en ce que** celle-ci est constituée d'un alliage Ni-Cr comportant du molybdène et du niobium.

3. Elingue de sécurité selon la revendication 1, **caractérisée en ce que** le fil utilisé a une épaisseur comprise entre 0,3 et 1,4 mm, de préférence néanmoins entre 0,5 et 0,8 mm.

4. Elingue de sécurité selon la revendication 1, **caractérisée en ce que** celle-ci contient en outre un certain nombre de boucles de fil de filaments plastiques relativement rigides, choisis parmi le PBO (poly-p- phénylène -2,6- benzobisoxasole), les fibres de carbone et les p-aramides.

5. Elingue de sécurité selon la revendication 4, **caractérisée en ce que** le nombre de boucles de fil s'élève à moins de 50% du nombre de boucles en métal.

6. Elingue de sécurité selon la revendication 1, **caractérisée en ce que**, aux deux extrémités de câble, les éclisses ouvertes sont divisées en deux éclisses partielles.

7. Elingue de sécurité selon la revendication 1, **caractérisée en ce que** la gaine de protection est une gaine thermorétractable, qui assure la position relative des enroulements du fil et laisse découvertes les éclisses aux extrémités de câble.
